# EUROPÄISCHE PATENTSCHRIFT

(11) **EP 0 924 499 B1**
(45) Veröffentlichungstag und Bekanntmachung des Hinweises auf die Patenterteilung: **31.10.2001**
(21) Anmeldenummer: 98123015.4
(22) Anmeldetag: 04.12.1998
(51) Int. Cl.: G01J 3/453

(54) **Interferometer nach Michelson**
Michelson interferometer
Interféromètre de Michelson

(30) Priorität: 20.12.1997 DE 19756936
(43) Veröffentlichungstag der Anmeldung: 23.06.1999
(73) Patentinhaber: Deutsches Zentrum für Luft- und Raumfahrt e.V., 53175 Bonn (DE)
(72) Erfinder: Tank, Volker, Dr., 82279 Eching (DE)
(74) Vertreter: von Kirschbaum, Albrecht, Dipl.-Ing.

(56) Entgegenhaltungen:
- DE-A- 3 346 455
- DE-C- 4 136 300
- KLAUS KÖRNER: "Ein neues Interferometer für die Fourier-Spektroskopie" OPTIK., Bd. 68, Nr. 3, 1984, Seiten 217-223, XP002099957 STUTTGART DE

## Beschreibung

Die Erfindung betrifft ein Interferometer nach Michelson zur Erzeugung optischer Wegdifferenzen zwischen zwei Strahlungsbündeln.

Solche Interferometer werden in vielen verschiedenen Ausführungsformen und in breiten Anwendungsfeldern zur optischen Spektroskopie (ultraviolette, sichtbare, infrarote, ferne infrarote Strahlung) und Spektrometrie im Labor und zunehmend auch im Feld, wie in der Prozeßtechnik und der Fernerkundung aus der Luft und dem Weltraum, verwendet.

Das Michelson-Interferometer selbst weist nur zwei Planspiegel und einen Strahlteiler (halbdurchlässigen Spiegel) auf. Die heute benutzten Interferometer nach Michelson verwenden aus bekannten Gründen (Steigerung der erreichbaren Wegdifferenz, Steigerung der optischen Stabilität während der Wegänderung) einen komplexeren Aufbau mit meist mehreren Planspiegel und einem oder mehreren Retroreflektoren (Tripelspiegel). Hierbei werden mittels der Tripelspiegel lineare oder rotatorische Bewegungen in optische Wegdifferenzen umgesetzt. Die dynamische optische Stabilität ist dabei größer als bei Verwendung von bewegten Planspiegeln.

Bei Interferometern dieser Art spielt aber auch die statische optische Stabilität eine große Rolle. Eine Verkippung von insbesondere planen, optischen Elementen (Planspiegeln, Strahlteilern), die eine Dejustierung der optischen Achse von wenigen Bogensekunden bewirken, haben einen Einfluß auf die resultierenden Spektren, was zumindest bei quantitativen Messungen oft nicht tolerierbar ist.

Die Folge sind Meßfehler, zu deren Vermeidung häufige Nachjustierungen notwendig sind. Die Verkippungen werden in der Regel schon durch in der Umwelt oder im Labor übliche Temperaturschwankungen ausgelöst. Darüber hinaus werden die Strahlungsbündel häufig zweimal über die planen Elemente geführt, wodurch der Einfluß der Dejustierung zusätzlich verstärkt wird.

Nachteilig bei gegenwärtig eingesetzten Interferometern nach Michelson ist daher,
daß die Anzahl der insbesondere planen, optischen Komponenten groß ist und daß deswegen die Interferometer anfällig für optische Dejustierungen der internen Strahlengänge sind (wobei jede Dejustierung eines jeden planen Elements in negativer Weise die internen Strahlengänge beeinflußt);
daß die internen Strahlengänge häufig zweimal über plane optische Komponenten geführt werden, wodurch Fehler in deren optischer Justierung sich in ihrer nachteiligen Wirkung auf die Funktion des Spektrometers verstärken;
daß eine optische Dejustierung allein durch die üblichen, natürlichen Temperaturschwankungen in nicht thermostatisierter Umgebung auftreten kann;
daß nach einer optischen Dejustierung quantitative Messungen stark fehlerbehaftet sein können, weshalb - um dieses zu vermeiden - aufwendige Neujustierungen oder Kalibrierungen oder beides notwendig sind, und
daß deswegen der unbetreute Einsatz dieser Geräte außerhalb von Laboratorien nicht oder nur mit sehr großem Aufwand möglich ist.

Aufgabe der Erfindung ist es daher, ein Interferometer anzugeben, welches möglichst wenige - vor allem wenig plane - optische Komponenten enthält und bei dem gleichzeitig die Vorteile von Interferometern nach Michelson erhalten bleiben.

Gemäß der Erfindung ist diese Aufgabe bei einer Vorrichtung nach dem Oberbegriff des Anspruchs 1 2 oder 3 durch die Merkmale in dessen kennzeichnenden Teil gelöst.

Bei der erfindungsgemäßen Vorrichtung ist ein an sich bekanntes Interferometer nach Michelson mit rotierendem Retroreflektor verwendet, bei dem die Rotation eines Retroreflektors um eine Drehachse erfolgt, die zur optischen Achse des Interferometers um einen Winkel α geneigt und gegenüber dem Symmetriezentrum des Retroreflektors (dem Tripelpunkt bei einem üblicherweise verwendeten Tripelspiegel) um eine Strecke d seitlich versetzt ist. (DE 41 36 300 C1)

Im Unterschied zu bekannten Ausführungsformen von Interferometern nach Michelson werden bei der Erfindung jedoch die beiden Strahlungsbündel - nach Teilung durch einen Strahlteiler - nicht über Umlenkspiegel, sondern direkt in den rotierenden Retroreflektor geleitet. Dadurch entfallen zwei bei bekannten Ausführungsformen von Interferometern nach Michelson verwendete plane Umlenkspiegel, die bisher Ursache möglicher Dejustierungen waren und, da sie vom Strahlengang zweimal getroffen wurden, einen besonders negativen Einfluß hatten. Bei den bekannten Ausführungsformen werden diese Umlenkspiegel vom Strahlengang jeweils zweimal getroffen

Nach Durchlaufen des rotierenden Retroreflektors treffen die beiden Strahlungsbündel bei der erfindungsgemäßen Lösung senkrecht auf je einen Planspiegel, werden von diesem reflektiert und durchlaufen den bisher zurückgelegten We rückwärts wieder zum Strahlteiler. Die Strahlungsbündel treffen folglich nur einmal auf den Planspiegel. Bei bekannten Ausführungsformen können die beiden Planspiegel als Lochspiegel mit einer Bohrung in der Mitte für das zum Retroreflektor und von ihm zurück laufende Strahlungsbündel ausgebildet sein. Bei dem erfindungsgemäßen Interferometer entfällt eine Bohrung im Planspiegel, wodurch die Herstellung der Planspiegel wesentlich vereinfacht ist.

Bei einer vorteilhaften Weiterentwicklung der Erfindung sind die beiden Planspiegel durch je einen ortsfesten Retroreflektor (Tripelspiegel, Katzenauge) ersetzt. Diese Retroreflektoren werden in an sich bekannter Weise so angeordnet, daß die beiden Strahlungsbündel, vom rotierenden Retroreflektor kommend, jeweils in einen der ortsfesten Retroreflektoren gelenkt werden, diesen durchlaufen, ihn parallel zum einfallenden Strahlungsbündel wieder verlassen und auf dem Weg rückwärts durch das Interferometer in den rotierende Retroreflektor eintreten. Die Strahlungsbündel treffen nach Durchlaufen des rotierenden Retroreflektors wieder auf den Strahlteiler.

Die Anordnung der beiden ortsfesten Retroreflektoren und ihre Neigung gegenüber den optischen Achsen der Strahlungsbündel ist so gewählt, daß die Strahlungsbündel beim Durchlaufen der Retroreflektoren nur einen geringen seitlichen Versatz erfahren (d.h. möglichst nahe beim Tripelpunkt eintreten und einen Auftreffwinkel möglichst nahe 45° haben).

Somit entfallen zwei weitere plane optische Elemente, die bisher Ursache möglicher Dejustierungen waren. Si sind bei der Erfindung ersetzt durch Retroreflektoren, deren geometrische Orientierung in weiten Grenzen völlig ohne Einfluß auf die Stabilität des Strahlengangs ist. Die zuletzt beschriebene Ausführungsform der Erfindung enthält somit als einziges planes optisches Element nur noch den Strahlteiler, während alle übrigen Komponenten Retroreflektoren sind.

In der Natur dieser Retroreflektoren liegt es, daß die geringfügigen möglichen Dejustierungen (die bei planen optischen Elementen zu Fehlern führen würden) ohne Einfluß auf die Funktion des Spektrometers sind. So sind gemäß der Erfindung alle planen Spiegelelemente bekannter Ausführungsformen von Interferometern mit rotierenden Tripelspiegeln entweder überflüssig geworden bzw. durch Retroreflektoren ersetzt.

Damit ist das erfindungsgemäße Interferometer einfacher im Aufbau, da es weniger Komponenten aufweist, und obendrein auch noch optisch stabiler im Betrieb als bekannte Interferometer. Während bei bekannten Interferometern der Strahlteiler und bis zu vier Planspiegel optisch präzise zueinander und in Bezug auf die beiden Strahlengänge (Interferometer-Arme) zu justieren und stabil zu halten sind, ist bei der zuletzt beschriebenen Ausführungsform der Erfindung nur noch der Strahlteiler in Bezug auf die beiden Strahlengänge (Strahlungsbündel) einzustellen.

Nachfolgend wird die Erfindung anhand von bevorzugten Ausführungsformen unter Bezugnahme auf die anliegenden Zeichnungen im einzelnen erläutert. Es zeigen:
- Fig.1: eine Ausführungsform eines Interferometers mit nur zwei Planspiegeln,
- Fig.2: eine Ausführungsform eines Interferometers mit nur zwei ortsfesten Tripelspiegeln;
- Fig.3: eine Ausführungsform eines Interferometers mit nur zwei Planspiegeln und einer Strahlteileranordnung mit Umlenkspiegel;
- Fig.4: eine Ausführungsform eines Interferometer mit zwei Planspiegeln und einer Strahlteileranordnung mit Umlenkspiegel zur Kompensation der dadurch verursachten zusätzlichen Wegdifferenz, und
- Fig. 5: eine der Fig.4 entsprechende Ausführungsform, wobei statt optischer Achsen die Strahlungsbündel dargestellt sind.

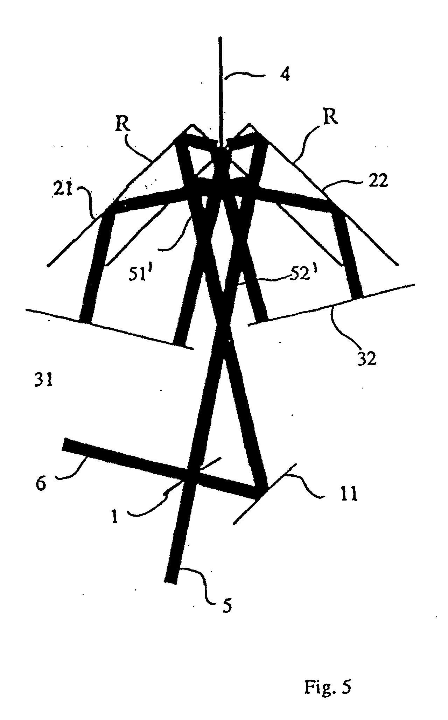

In allen Figuren außer in Fig.5 sind der besseren Übersichtlichkeit halber anstelle der vollständigen Strahlungsbündel nur deren optische Achsen dargestellt, obwohl die Strahlungsbündel sich durch zu den optischen Achsen parallele Linien darstellen ließen. Ferner sind in allen Figuren die Retroreflektoren schematisch als rechtwinklige Elemente dargestellt, da funktional diese Darstellung ausreichend ist. In der Praxis handelt es sich vorzugsweise um Tripelspiegel, obwohl andere Retroreflektoren, wie Katzenaugen, sphärische Retroreflektoren u.ä. auch geeignet sind.

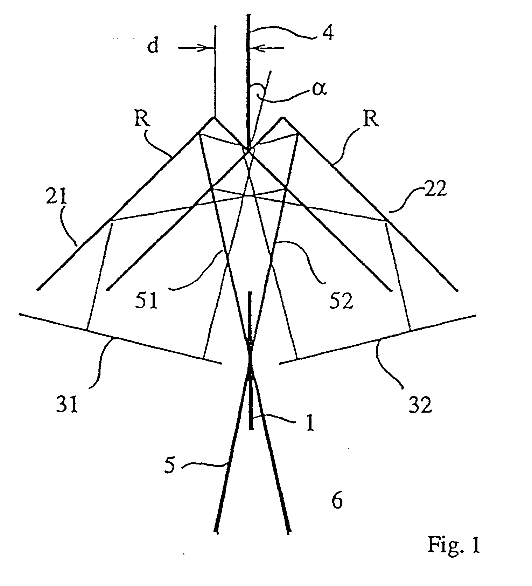

Fig. 1 zeigt schematisch eine Interferometeranordnung mit einem Strahlteiler 1, einem um eine Drehachse 4 kontinuierlich rotierenden Retroreflektor R in zwei einander gegenüberliegenden Drehstellungen 21 und 22, sowie zwei Planspiegeln 31 und 32. Ferner sind - allerdings nur in Fig.1 - der Winkel α zwischen Drehachse 4 und optischen Achsen der weiter unten beschriebenen Strahlungsbündel, sowie der Versatz d der Drehachse 4 in Bezug auf den nicht näher bezeichneten Tripelpunkt des Retroreflektors R eingetragen.

Ein auf den Strahlteiler 1 fallendes Strahlungsbündel 5 wird von diesem in zwei amplitudengleiche Hälften geteilt, die nach Reflexion am Strahlteiler 1 als Strahlungsbündel 51 und nach Transmission durch den Strahlteiler 1 als Strahlungsbündel 52 von zwei einander gegenüberliegenden Seiten und unter verschiedenem Winkel in den Retroreflektor R in den Drehstellungen 22 bzw. 23 eintreten. Beide Strahlungsbündel 51, 52 durchlaufen den Retroreflektor R in den Drehstellungen 21 bzw. 22 und treffen dann jeweils auf einen der zwei P anspiegel 31 bzw. 32.

Die Planspiegel 31, 32 sind so ausgerichtet angeordnet, daß die Strahlungsbündel 51, 52 senkrecht auf sie treffen. An den Planspiegeln 31, 32, in sich selbst zurückreflektiert, durchlaufen die beiden Strahlungsbündel 51, 52 die beschriebenen optischen Wege zurück zum Strahlteiler 1, wo sie rekombinieren und als Austrittsbündel 6 die Anordnung in Richtung auf einen nicht näher dargestellten Strahlungsdetektor verlassen.

Der Strahlungsdetektor erfaßt in bekannter Weise die Strahlung zu dem Interferogramm. Während die Rotation des Retroreflektors R verändern sich wie bei bekannten Ausführungsformen die optischen Weglängen der Strahlungsbündel 51 und 52 wechselweise und gegenläufig; während der Weg für das Strahlungsbündel 51 kürzer wird, wird derjenige für das Strahlungsbündel 52 länger, und umgekehrt.

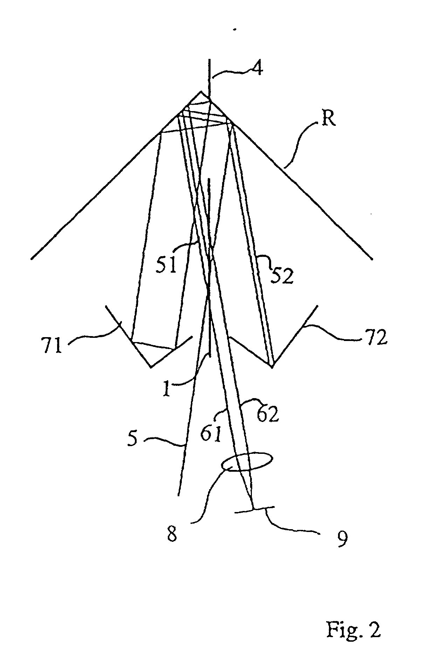

Fig.2 zeigt schematisch eine Interferometeranordnung mit einem Strahlteiler 1, einen um eine Drehachse 4 kontinuierlich rotierenden Retroreflektor R, der hier zur besseren Übersicht in nur einer extremen Drehstellung dargestellt ist, wobei sich die zweite extreme Drehstellung durch Spiegelung der Zeichnung am Strahlteiler 1 ergibt, sowie zwei ortsfeste Tripelspiegel 71 und 72.

Ein auf den Strahlteiler 1 fallendes Strahlungsbündel 5 wird analog der Darstellung in Fig.1 von diesem in zwei amplitudengleiche Hälften geteilt, die als das Strahlungsbündel 51 nach Reflexion am Strahlteiler 1 und das Strahlungsbündel 52 nach Transmission durch den Strahlteiler 1 von zwei einander gegenüberliegenden Seiten und unter verschiedenem Winkel in den Retroreflektor R eintreten. Beide Strahlungsbündel durchlaufen den Retroreflektor R und treffen dann jeweils auf einen der beiden ortsfesten Tripelspiegel (Retroreflektor 71 bzw. 72).

Die Anordnung der ortsfesten Retroreflektoren 71, 72 bezüglich Lage und Neigung zu den optischen Achsen der beiden Strahlungsbündeln ist so gewählt, daß die Strahlungsbündel beim Durchlaufen der Retroreflektoren 71, 72 nur einen geringen seitlichen Versatz erfahren (d.h. möglichst nahe beim Tripelpunkt eintreten und einen Auftreffwinkel möglichst nahe 45° haben).

Die beiden Strahlungsbündel durchlaufen den ihnen zugeordneten Retroreflektor 71 bzw. 72, verlassen diesen parallel und mit seitlichem Versatz zur Einfallsrichtung, um dann über den rotierenden Retroreflektor R auf den beschriebenen optischen Wegen zum Strahlteiler 1 zurückzukehren, von wo sie als die beiden Austrittsbündel 61 und 62 auf eine (Austritts-) Sammeloptik 8, (die schematisch als Sammellinse dargestellt ist) treffen, die die Strahlungsbündel 61, 62 in ihrer Brennebene 9 vereinigt, so daß die beiden Strahlungsbündel 61 und 62 an dieser Stelle rekombinieren.

Die Sammeloptik 8 ist mit ihrer optischen Hauptebene senkrecht zur optischen Achse der Strahlungsbündel 61 und 62 angeordnet und sorgt auch dafür, daß beide Strahlungsbündel 61,62, die ja nicht deckungsgleich auf die Sammeloptik 8 treffen, in der Brennebene 9 zur Deckung gebracht werden. Damit wird der bei Interferometern bekannte, optische Modulationsgrad erhöht. In der Brennebene 9 ist ein nicht näher dargestellter Strahlungsdetektor angeordnet, der in bekannter Weise die Strahlung zu einem Interferogramm umsetzt.

Bei den Anordnungen in Fig.1 und Fig.2 trifft das einfallende Strahlungsbündel 5 unter einem flachen Winkel auf den Strahlteiler 1. Das kann von Nachteil sein, wenn für flache Einfallswinkel die Strahlteilereffizienz (Verhältnis von reflektiertem zu transmittiertem Strahlungsanteil) ungünstig wird. In aller Regel ist der optimale Einfallswinkel 45°.Der flache Einfallswinkel auf den Strahlteiler 1, wie in den Anordnungen von Fig. 1 und Fig. 2, ist aber notwendig, wenn die geteilten Strahlungsbündel 51 und 52 (Fig.1) direkt vom Strahlteiler 1 in den rotierenden Retroreflektor 21 bzw. 22 geführt werden sollen.

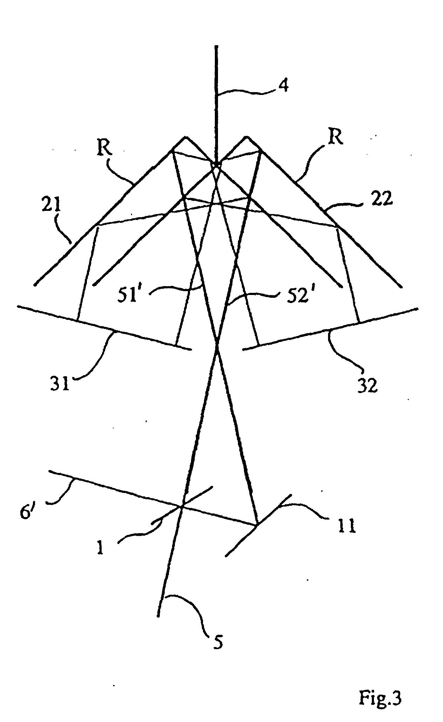

Fig.3 zeigt schematisch eine weitere Ausführungsform der Erfindung, die es ermöglicht, den einfallenden Strahl 5 unter beliebigen Winkeln auf den Strahlteiler 1 treffen zu lassen. Fig. 3 ist im wesentlichen identisch mit Fig.1, insbesondere ist auch die Richtung des einfallenden Strahlungsbündels 5 in Bezug auf den rotierenden Retroreflektor 21, 22 identisch.

In Fig. 3 ist jedoch der Strahlteiler 1 so ausgerichtet, daß er mit der optischen Achse des einfallenden Strahlungsbündels einen Winkel von 45° bildet. Das vom Strahlteiler 1 transmittierte Strahlungsbündel 52' nimmt dann einen weiteren Verlauf, der demjenigen in Fig.1 entspricht. Das reflektierte Strahlungsbündel 51' setzt zunächst seinen Weg senkrecht zur Richtung des einfallenden Strahls 5 fort. Es trifft dann auf den planen Umlenkspiegel 11, der so ausgerichtet angeordnet ist, daß das Strahlungsbündel 51' an ihm reflektiert, den weiteren Verlauf identisch demjenigen vom Fig. 1 nimmt. Alle übrigen Funktionen und Strahlenverläufe sind identisch mit denjenigen in Fig.1, mit der Ausnahme, daß bei der Rückkehr der Weg von Strahlungsbündel 51' wieder über den planen Umlenkspiegel 11 erfolgt und die Rekombination beider Strahlungsbündel 51' und 52' als Strahlungsbündel 6' senkrecht zum einfallenden Strahlungsbündel 5 verläuft. Das Strahlungsbündel 6' wird in bekannter Weise auf einen nicht näher dargestellten Strahlungsdetektor geführt.

Der Weg des Strahlungsbündels 51' ist durch die Umlenkung über den Spiegel 11 länger als der des Strahlungsbündels 52'. Bei Verwendung des Interferometers als Spektrometer ist es erforderlich, daß während der Rotation des Retroreflektors 21 bzw. 22, (die die Differenz der optischen Wege beider Strahlungsbündel verändert) in einer Drehstellung die Wegdifferenz Null wird. Das kann nur erreicht werden, wenn die durch die Rotation erreichbare Wegdifferenz gleich oder größer ist als die optische Wegdifferenz zwischen beiden Strahlungsbündeln, die durch den Umweg des Strahlungsbündels 51' über den Planspiegel 11 zustande kommt.

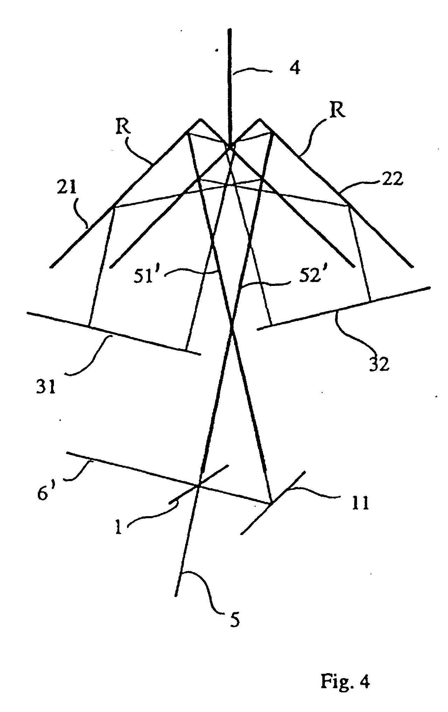

Diese durch den Umweg verursachte Wegdifferenz kann aber auch durch entsprechende geometrische Anordnung der Planspiegel 31 oder 32 ausgeglichen werden. Werden die Planspiegel 31 und 32 im Vergleich zueinander unterschiedlich nah oder fern im Bezug zum rotierenden Retroreflektor 21 bzw. 22 angeordnet, so werden damit zusätzliche (feste) optische Wegdifferenzen eingeführt. Wird z.B., wie in Fig.4 prinzipiell dargestellt, der Planspiegel 31 nicht auf gleicher Höhe wie der Planspiegel 32, sondern weiter vom rotierenden Retroreflektor 21 entfernt angeordnet als der Spiegel 32, wird hierdurch nur der Weg für das Strahlungsbündel 52' beeinflußt, nämlich verlängert, und die gewünschte Kompensation des Einflusses des Planspiegels 11 auf das Strahlungsbündel 51' möglich. Fig.5 zeigt eine der Fig.4 entsprechende Ausführungsform, wobei statt optischer Achsen die Strahlungsbündel stark ausgezogen dargestellt sind.

Die dargestellte Erweiterung der Erfindung mit dem veränderten Strahlengang am Strahlteiler 1 und dem Planspiegel 11 läßt sich auch in der Anordnung nach Fig.2 verwenden. Die Kompensation der zusätzlichen Wegdifferenz erfolgt durch entsprechende Anordnung der ortsfesten Retroreflektoren 71 und 72.

## Patentansprüche

1. Interferometer nach Michelson, mit einem Strahlteiler (1), mit einer Sammeloptik (8) und einem Strahlungsdetektor, **dadurch gekennzeichnet, daß** nur ein um eine seitlich zur Symmetrieachse versetzte Drehachse (4) rotierender Retroreflektor (R) und zwei ortsfeste Retroreflektoren (71,72) entsprechend ausgerichtet vorgesehen sind,
so daß ein auf den Strahlteiler (1) treffendes Strahlungsbündel (5) so in zwei Strahlungsbündel (51, 52) geteilt wird, daß diese direkt in den rotierenden Retroreflektor (R) eintreten, und zwar in einer Ebene und in Bezug auf die Drehachse (4) auf einander gegenüberliegenden Seiten des rotierenden Retroreflektors (R),
daß die Strahlungsbündel (51, 52) nach Durchlaufen des rotierenden Retroreflektors (R) in den ihnen jeweils zugeordneten, ortsfesten Retroreflektor (71,72) eintreten, diese durchlaufen und dort den gleichen Weg in umgekehrter Richtung über den rotierenden Retroreflektor (R) zurück zum Strahlteiler (1) nehmen, von wo sie als zwei austretende, parallele Strahlungsbündel (61,62) weiterlaufen und auf die Sammeloptik (8) treffen, deren optische Hauptebene senkrecht zu den Strahlungsbündeln (61,62) ausgerichtet ist, und welche die Strahlungsbündel (61, 62) in ihrer Brennebene (9) vereinigt, in welcher der Strahlungsdetektor angeordnet ist.

2. Interferometer nach Michelson, mit einem Strahlteiler (1), mit einer Sammeloptik (8) und einem Strahlungsdetektor, **dadurch gekennzeichnet, daß** nur ein um eine seitlich zur Symmetrieachse versetzte Drehachse (4) rotierender Retroreflektor (R) und zwei ortsfeste Planspiegel (31,32) entsprechend ausgerichtet angeordnet sind, so daß ein auf den Strahlteiler (1) treffendes Strahlungsbündel (5) so in zwei Strahlungsbündel (51, 52) geteilt wird, daß diese direkt in den rotierenden Retroreflektor (R) eintreten, und zwar in einer Ebene und in Bezug auf die Drehachse (4) auf einander gegenüberliegenden Seiten des rotierenden Retroreflektors (R),
daß die Strahlbündel (51, 52) nach Durchlaufen des rotierenden Retroreflektors (R) auf die ihnen jeweils zugeordneten, ortsfesten Planspiegel (31, 32) senkrecht auftreffen, direkt in sich selbst zurückreflektiert werden, und in umgekehrter Richtung den Weg über den rotierenden Reflektor (R) zurück zum Strahlteiler (1) nehmen, wo sie zu einem austretenden Strahlungsbündel (6) vereinigt, auf den Strahlungsdetektor treffen.

3. Interferometer nach Michelson, mit einem Strahlteiler (1), mit einer Sammeloptik (8) und einem Strahlungsdetektor, **dadurch gekennzeichnet, daß** nur ein um eine seitlich zur Symmetrieachse versetzte Drehachse (4) rotierender Retroreflektor (R) und zwei ortsfeste Planspiegel (31, 32)entsprechend.ausgerichtet vorgesehen sind, sowie der Strahlteiler (1) und ein Umlenkplanspiegel (11) so zueinander ausgerichtet angeordnet sind,
daß ein einfallendes Strahlungsbündel (5) unter 45° auf den Strahlteiler (1) auftrifft, von diesem in zwei senkrecht zueinander verlaufende Strahlungsbündel (51',52') geteilt wird, von denen das eine Strahlungsbündel (52') direkt in den rotierenden Retroreflektor (R; 22) läuft, während das andere Strahlungsbündel (51') auf den Umlenkplanspiegel (11) trifft, der so ausgerichtet ist, daß das zweite Strahlungsbündel (51') in Richtung zum rotierenden Retroreflektor (R; 21) so reflektiert wird, daß es in derselben Ebene wie das direkt auftreffende Strahlungsbündel (52') eintritt, und zwar in Bezug auf dessen Drehachse (4) auf der zu dem direkt auftreffenden Strahlungsbündel (52') gegenüberliegenden Seite des rotierenden Retroreflektors (R) und
daß zum Ausgleich der zusätzlichen Wegstrecke für das den Weg über den Umlenkplanspiegel (11) nehmende Strahlungsbündel (51') eine Verlängerung des Weges für das transmittierte Strahlungsbündel (52') dadurch erreicht ist, daß der diesem zugeordnete, ortsfeste Planspiegel (31) weiter entfernt vom rotierenden Retroreflektor (R) angeordnet ist, wobei die Strahlungsbündel (51', 52') nach Durchlaufen des rotierenden Retroreflektors (R) auf die ihnen zugeordneten ortsfester Planspiegel (31, 32) senkrecht auftreffen, direkt in sich zurück reflektiert werden und in umgekehrter Richtung den Weg über den Retroreflektor (R) zurück zum Strahlteiler (1) nehmen-, wo sie zu einem austretenden Strahlungsbündel (6') vereinigt auf den Strahlungsdetektor treffen.

## Claims

1. A Michelson interferometer comprising a beam splitter (1), a collimator (8) and a radiation detector, **characterized in that** only one rotatory retroreflector (R) rotating about an axis of rotation (4) laterally offset from the axis of symmetry and two stationary retroreflectors (71, 72) are provided correspondingly oriented so that
a pencil beam (5) impacting said beam splitter (1) is split into two pencil beams (51, 52) so that they directly enter said rotatory retroreflector (R) in a plane and at two opposite sides of said rotatory retroreflector (R) relative to said axis of rotation (4),
that said pencil beams (51, 52) after passing through said rotatory retroreflector (R) enter said stationary retroreflectors (71, 72) assigned thereto in each case, pass therethrough and are returned by the same path in the reverse direction via said rotatory retroreflector (R) to said beam splitter (1), from where they continue as two emerging parallel pencil beams (61, 62) and impact said collimator (8) whose optical major plane is oriented perpendicular to said pencil beams (61, 62) and which unites said pencil beams (61, 62) in their focal plane (9) in which said radiation detector is arranged.

2. A Michelson interferometer comprising a beam splitter (1), a collimator (8) and a radiation detector, **characterized in that** only one rotatory retroreflector (R) rotating about an axis of rotation (4) laterally offset from said axis of symmetry and two stationary plane mirrors (31, 32) are provided correspondingly oriented so that
a pencil beam (5) impacting said beam splitter (1) is split into two pencil beams (51, 52) so that they directly enter said rotatory retroreflector (R) in a plane and at two opposite sides of said rotatory retroreflector (R) relative to said axis of rotation (4),
that said pencil beams (51, 52) after passing through said rotatory retroreflector (R) perpendicularly impact said stationary plane mirrors (31, 32) assigned thereto in each case, are directly retroreflected and are returned by the same path in the reverse direction via said rotatory retroreflector (R) to said beam splitter (1), where they are united into a single emerging beam pencil (6) to impact said radiation detector.

3. A Michelson interferometer comprising a beam splitter (1), a collimator (8) and a radiation detector, **characterized in that** only one rotatory retroreflector (R) rotating about an axis of rotation (4) laterally offset from said axis of symmetry and two stationary plane mirrors (31, 32) are provided correspondingly oriented as well as said beam splitter and a deflection mirror (11) are arranged oriented to each other so that
an incident pencil beam (5) impacts said beam splitter (11) at an angle of 45°, is split thereby into two pencil beams (51', 52') oriented perpendicular to each other, of which the one beam pencil (52') directly enters said rotatory retroreflector (R; 22) whilst the other beam pencil (51') impinges said deflecting plane mirror (11) oriented such that said second beam pencil (51') is reflected in the direction of said rotatory retroreflector (R; 21) so that it enters in the same plane as said directly impinging pencil beam (52') relative to the axis of rotation (4) thereof at the side of said rotatory retroreflector (R) opposite the directly impinging pencil beam (52') and that
to compensate the additional path distance for the pencil beam (51') taking the path via said deflecing plane mirror (11) the path for the transmitted pencil beam (52') is lengthened by arranging said stationary plane mirror (31) assigned thereto further away from said rotatory retroreflector (R), said pencil beams (51',52') after passing through said rotatory retroreflector (R) perpendicularly impact said stationary plane mirrors (31, 32) assigned thereto, are directly retroreflected and are returned by the same path in the reverse direction via said rotatory retroreflector (R) to said beam splitter (1), where they are united into a single emerging beam pencil (6') to impact said radiation detector.

## Revendications

1. Interféromètre de Michelson, avec un séparateur de rayons (1), avec une optique convergente (8) et un détecteur de rayonnement, **caractérisé en ce que** seul un rétroréflecteur en rotation (R) autour d'un axe rotatif (4) décalé latéralement par rapport à l'axe de symétrie et deux rétroréflecteurs stationnaires (71, 72) sont prévus et alignés de façon correspondante,
de sorte qu'un faisceau de rayonnement (5) en incidence sur le séparateur de rayons (1) est séparé en deux faisceaux de rayonnement (51, 52), **en ce que** ceux-ci arrivent directement dans le rétroréflecteur en rotation (R), et ce dans un plan et par rapport à l'axe de rotation (4) sur des côtés opposés l'un par rapport à l'autre du rétroréflecteur en rotation (R),
**en ce que** les faisceaux de rayonnement (51, 52) par traversée du rétroréflecteur en rotation (R) arrivent dans le rétroréflecteur (71, 72) stationnaire respectivement affecté, traversent celui-ci et de là effectuent en retour la même trajectoire dans la direction inverse par le rétroréflecteur en rotation (R) vers le séparateur de rayons (1), à partir de là ils poursuivent leur trajectoire sous forme de deux faisceaux de rayonnement parallèles en sortie (61, 62) et arrivent en incidence sur l'optique convergente (8) dont le plan principal optique est perpendiculaire aux faisceaux de rayonnement (61, 62) et réunit les faisceaux de rayonnement (61, 62) dans leur plan focal (9) dans lequel est disposé le détecteur de rayonnement.

2. Interféromètre de Michelson, avec un séparateur de rayons (1), avec une optique convergente (8) et un détecteur de rayonnement, **caractérisé en ce que** seul un rétroréflecteur (R) en rotation autour d'un axe rotatif (4) décalé latéralement par rapport à l'axe de symétrie et deux miroirs plans stationnaires (31, 32) sont alignés de façon correspondante, de telle sorte qu'un faisceau de rayonnement (5) en incidence sur le séparateur de rayons (1) est séparé en deux faisceaux de rayonnement (51, 52), **en ce que** ceux-ci arrivent directement dans le rétroréflecteur en rotation (R), et ce dans un plan et par rapport à l'axe de rotation (4) sur des côtés opposés entre eux du rétroréflecteur en rotation (R),
**en ce que** le faisceau de rayonnement (51, 52), après avoir traversé le rétroréflecteur en rotation (R), arrive en incidence perpendiculairement sur les miroirs plans stationnaires (31, 32) respectivement affectés, sont rétroréfléchis directement l'un sur l'autre et reprennent dans la direction opposée la trajectoire par le réflecteur en rotation (R) vers le séparateur de rayons (1) où ils se réunissent en un faisceau de rayonnement de sortie (6) et arrivent en incidence sur le réflecteur de rayonnement.

3. Interféromètre de Michelson, avec un séparateur de rayons (1), avec une optique convergente (8) et un détecteur de rayonnement, **caractérisé en ce que** seul un rétroréflecteur (R) en rotation autour d'un axe rotatif (4) décalé parallèlement par rapport à l'axe de symétrie et deux miroirs plans stationnaires (31, 32) sont prévus en alignement correspondant, ainsi que le séparateur de rayons (1) et un miroir plan de dérivation (11) alignés entre eux de telle sorte qu'un faisceau de rayonnement en incidence (5) arrive à 45° sur le séparateur de rayons et est divisé en deux faisceaux de rayonnement (51', 52') s'étendant perpendiculairement entre eux, et dont un faisceau de rayonnement (52') arrive directement dans le rétroréflecteur en rotation (R ; 22), tandis que l'autre de faisceau de rayonnement (51') arrive sur le miroir plan de dérivation (11) qui est aligné de telle sorte que le deuxième faisceau de rayonnement (51') est réfléchi en direction du rétroréflecteur en rotation (R ; 21) de telle sorte qu'il pénètre dans le plan de celui-ci comme le faisceau de rayonnement directement en incidence (52'), et ce par rapport à son axe de rotation (4) sur le côté opposé du rétroréflecteur en rotation (R) par rapport au faisceau de rayonnement (52') directement en incidence, et **en ce que**, pour compenser la trajectoire supplémentaire pour le faisceau de rayonnement prenant la trajectoire par le miroir plan de dérivation (11), on obtient ainsi une prolongation de la trajectoire pour le faisceau de rayonnement transmis (52'), **en ce que** le miroir plan (31) stationnaire affecté à celui-ci est disposé de façon plus éloignée par rapport au rétroréflecteur en rotation (R), moyennant quoi les faisceaux de rayonnement (51', 52') après passage du rétroréflecteur en rotation (R) arrivent en incidence sur les miroirs plans (31, 32) stationnaires affectés à ceux-ci, sont réfléchis directement en retour et prennent, dans la direction inverse, la trajectoire par le rétroréflecteur (R) en retour vers le séparateur de rayons (1) où ils sont réunis en un faisceau de rayonnement de sortie (6') sur le détecteur de rayonnement.
